# EUROPÄISCHE PATENTSCHRIFT

(11) **EP 1 935 956 B1**
(45) Veröffentlichungstag und Bekanntmachung des Hinweises auf die Patenterteilung: **08.02.2017**
(21) Anmeldenummer: 07122346.5
(22) Anmeldetag: 05.12.2007
(51) Int. Cl.: C09J 11/02, C09J 133/02, C09J 133/08, D21H 19/10, D21H 27/00

(54) **VERWENDUNG VON REPULPIERBAREN HAFTKLEBEMASSEN FÜR DIE VERKLEBUNG AUF CALCIUM(II)IONENHALTIGEM PAPIER**
USE OF REPULPABLE PRESSURE-SENSITIVE ADHESIVES FOR BONDING OF PAPER COMPRISING CALCIUM(II) IONS
UTILISATION DES MASSES AUTO-COLLANTES PUVANT ÊTRE REFONDUES POUR LE COLLAGE DE PAPIERS COMPRENANT DES IONS DE CALCIUM(II)

(30) Priorität: 20.12.2006 DE 102006060980; 04.09.2007 DE 102007041734
(43) Veröffentlichungstag der Anmeldung: 25.06.2008
(73) Patentinhaber: tesa SE, 22848 Norderstedt (DE)
(72) Erfinder: Ellringmann, Dr. Kai, 22589 Hamburg (DE); Wulf, Dr. Stefan, 22869 Schenefeld (DE); Preuß, Philipp, 22851 Norderstedt (DE)

(56) Entgegenhaltungen:
- EP-A1- 1 685 855
- WO-A1-00/32688
- WO-A1-01/10968
- WO-A1-2006/132488
- DE-A1- 19 814 087
- US-A1- 2002 030 287
- Bernd Glassl: "Chelatbildner", Römpp online Version 4.0, 1 May 2004 (2004-05-01), pages 1-1, XP055112267, Retrieved from the Internet: URL:https://roempp.thieme.de/roempp4.0/do/ data/RD-03-01113 [retrieved on 2014-04-04]
- Anonymous: "Papier", Wikipedia, 21 July 2015 (2015-07-21), pages 1-50, XP055206665, Retrieved from the Internet: URL:https://de.wikipedia.org/wiki/Papier [retrieved on 2015-08-06]

## Beschreibung

Die Erfindung betrifft die Verwendung gemäß Anspruch 1 von repulpierbare Klebmassen insbesondere für die Verklebung auf füllstoffhaltigen Materialien.

Eine etablierte Methode zur Anbietung von repulpierbaren Klebmassen besteht in der Herstellung von (Meth-)Acrylsäurepolymeren oder Acrylatcopolymeren umfassend Acrylsäure und zumindest ein Acrylat- und/oder Methacrylatcomonomer, wie beispielsweise Alkylacrylat, Alkylmethacrylat, 2-Ethoxalyloxyethylmethacrylate, 2-Ethoxyethylacrylat, Hexaethylmethacrylat, Ethylhexylacrylat, Butylacrylat, Isooctylacrylat oder dergleichen. gegebenenfalls kann das Polymer auch noch andere, radikalisch copolymerisierbare Comonomere wie Vinylcaprolactam, Vinylacetat oder dergleichen enthalten.

Dieses Basispolymer kann und wird typischerweise mit Harzen und/oder Weichmachern abgemischt, um die klebtechnischen Eigenschaften der resultierenden (Haft-)Klebmasse maßgeschneidert einstellen zu können. Die zugesetzten Komponenten sind idealerweise wasserlöslich oder -dispergierbar, sie können sowohl niedermolekularer als auch hochmolekularer Natur sein.

Das rheologische Profil der Klebmasse wird durch gezielte Vernetzung des Basispolymeren eingestellt. Hiebei kommen sowohl kovalent (Isocyanate, Epoxide, Hydrazine, Amine) als auch ionisch wirkende [Aluminium-(III), Tallium(_IV), Cer-(IV)] Vernetzungsreagenzien zum Einsatz.

Derart hergestellte repulpierbare (Haft-)Klebmassen, die ihre Hauptanwendung in Produkten für die papiererzeugende und -weiterverarbeitende Industrie haben, zeigen in Kontakt mit füllstoffhaltigen Papieren jedoch häufig einen deutlichen Einbruch ihrer klebtechnischen Eigenschaften, der bis hin zum vollständigen Verlust von Klebkraft und Anfassklebrigkeit (Tack) gehen kann.

Füllstoffhaltige Substrate, insbesondere Papiere können durch Alterungsprozesse oder äußere Einflüsse mehrwertige Metallionen abgeben. Insbesondere ergibt sich durch die häufig im Papier oder in Substanzen, mit denen das Papier behandelt wurde, vorhandenen Calciumionen ein Problem, da Calcium ein in der Papierindustrie üblicher und zunehmend eingesetzter Füllstoff und Beistoff in Strichmitteln ist.

Der Eigenschaftsverlust der (Haft-)Klebmasse lässt sich insbesondere auf eine Migration der Metallionen in die Klebmasse zurückführen. Die gezielt vernetzten carboxylhaltigen und/oder säurehaltigen Copolymere können auf diesem Weg über das gewünschte Maß hinaus unkontrolliert nachvernetzen. Diese Nachvernetzung führt zu einer nachteiligen Beeinflussung des rheologischen Profils derart, dass eine massive Erhöhung der Kohäsion und damit einhergehend eine Reduktion der Anfassklebrigkeit verursacht wird, ungünstigstenfalls bis hin zum vollständigen Verlust von Klebkraft und Tack.

Insbesondere für die Anwendung in der papierverarbeitenden Industrie, beispielsweise im Zusammenhang mit dem fliegenden Rollenwechsel, stellt sich an die einzusetzenden Klebebänder daher ein strenges Anforderungsprofil. Bei der Verarbeitung von Flachbahnmaterial, insbesondere von Papier, ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig Haftklebebänder zum Einsatz, um das Ende der alten Bahn mit dem Anfang der neuen Bahn zu verbinden. So müssen diese Klebebänder - über die gesamte Anwendungsdauer hinweg - einen hohen Tack, eine gute Kohäsion sowie gute Repulpierbarkeit [Einbringbarkeit in die Pulpe, also den in Wasser gelösten beziehungsweise aufgeschwemmten Papier- oder Faserbrei, bei der Wiederaufbereitung von (Alt-)Papier; nicht zwingend gleichbedeutend mit "Wasserlöslichkeit"] aufweisen.

Die DE 198 14 087 A offenbart stabilisierte, wässrige Kontaktklebstoffe für therapeutische Anwendungen sowie die Verwendung von Phosphaten als Additive für derartige Klebstoffe. Die Schrift US 2002/030287 A offenbart einen leitfähigen Klebstoff basierend auf einem Epoxyharz, der außerdem einen mehrzähnigen Liganden - wie etwa EDTA - oder ein Polyphosphat umfasst. Die Schrift WO 00/32688 A offenbart eine aus Acrylaten basierende Reaktivklebstoff-Zusammensetzung mit einem verbesserten Anwendungszeitraum, die ein EDTA-Salz enthält. Der Einsatz von Chelatbildnem in Haftklebstoffzusammensetzungen auf (Meth)Acrylatbasis ist dem Fachmann auch aus der Schrift WO 2006/132488 A bekannt. In keiner der vorgenannten Schriften wird aber die Verklebung auf Papier oder die Problematik calciumionenhaltiger Papiere wird angesprochen.
Die Schrift EP 1 685 855 A lehrt die Verwendung einer haftklebemasse auf Basis eines Acrylharzes enthaltend Phosphate für ein Deodorant; innerhalb dieser Schrift wird auch die Auftragung derartiger Klebemassen auf Papier beschrieben. Die Schrift iust jedoch nicht geeignet, Hinweise auf die Lösung der Problematik von Calciumionen in Papieren für darauf aufgetragene Klebmassen zu geben, da eine derartige Problematik in der Schrift nicht angesprochen wird

Aufgabe der Erfindung ist es, die Verwendung einer Klebemasse gemäß Anspruch 1 anzubieten, die eine erhöhte Stabilität hinsichtlich ihrer klebtechnischen und/oder rheologischen Eigenschaften bei Verklebungen auf füllstoffhaltigen Materialien aufweist.

Gelöst werden konnte die Aufgabe überraschend durch den Zusatz geeigneter Additive zu insbesondere säurehaltigen Klebmassen, bevorzugt Haftklebmassen. Üblicherweise konnten (Haft-)Klebmassen eingesetzt werden, deren Basiszusammensetzung (also ohne die Additive) an sich bekannt war.

Dementsprechend betrifft die Erfindung die Verwendung einer Haftklebemasse nach einer an sich bekannten Formulierung für die Verklebung auf calcium(ll)ionenhaltigem Papier. Die Haftklebemasse enthält Additive, die in der Lage sind, Metallionen im Sinne chemischer und/oder physikalischer Wechselwirkungen zu binden, wobei die Additive ausgewählt sind aus der Gruppe umfassend Phosphate, Polyphosphate und Phosphonate.

Die erfindungsgemäß zugesetzten Additive sind solche, die in der Lage sind, Metallionen, insbesondere Erdalkalimetallionen, ganz besonders Calcium(II)ionen zu binden und somit abzufangen. Binden im Sinne dieser Schrift umfasst chemische Wechselwirkungen, elektrochemische Wechselwirkungen und physikalische Wechselwirkungen (z.B. elektrostatische Wechselwirkungen) zwischen den Additiven und den vorgenannten Ionen, und zwar insbesondere solche Wechselwirkungen, bei den die Rückreaktion (das "Wiederlösen" der Bindung) thermodynamisch erschwert ist.

Die zugesetzten Additive werden besonders bevorzugt gewählt aus der Gruppe der mit Metallionen, insbesondere mit Erdalkalimetallionenen, ganz besonders mit Calcium-(II)-Ionen schwerlösliche Salze bildenden chemischen Verbindungen, aus der Gruppe der die vorstehend genannten Ionen komplexierenden chemischen Verbindungen und/oder aus der Gruppe der die vorstehend genannten Ionen physikalisch und/oder chemisch abfangenden, insbesondere räumlich einschließenden Substanzen und chemischen Verbindungen Als erfindungsgemäß besonders geeignet haben sich solche Additive herausgestellt, die insbesondere in der Waschmittelindustrie zur Kontrolle der Wasserhärte eingesetzt werden, insbesondere also wasserhärtesenkende Additive, besonders solche Additive, die in der Lage sind, Metallionen, insbesondere Erdalkalimetallionen, als schwerlösliche Salze zu binden. Insbesondere für die Anwendung der Klebemasse für die Verklebung auf Papieren, die üblicherweise einen mehr oder weniger hohen Gehalt an Calcium (2+)-Iohnen aufweisen, sind solche Additive von Vorteil, die geeignet sind, eben diese Ca²⁺-Ionen zu "deaktivieren".

Erfindungsgemäß sehr geeignete Additive für die Klebmassen sind solche Substanzen, die üblicherweise (insbesondere in der Wasseraufbereitung) als Fällungsmittel für Metallionen, insbesondere Erdalkalimetallionen, wie Calcium-(II)- oder Magnesium-(II)-Ionen eingesetzt werden. Als derartige Additive werden Phosphate, Polyphosphate und/oder Phosphonate gewählt.

Beispielhafte hervorragende Additive aus dieser Gruppe sind Trinatriurnphosphat, noch besser Ammoniumphosphat (insbesondere Ammoniumdihydrogenphosphat und/oder Diammoniumhydrogenphosphat), weiterhin auch Natriumpolyphosphat.

Es kann weiterhin sehr vorteilhaft sein, Mischungen zweier oder mehrerer Additive oder Mischungen eines oder mehrerer Additive mit weiteren Substanzen einzusetzen, wie zum Beispiel eine Mischung aus Natriumpolyphosphat und Alkylphosphonat.

Die erfindungsgemäßen Additive werden der Klebmasse bevorzugt in einer Menge bis zu 10 Gew.-%, besonders bevorzugt in einer Menge von 2 bis 5 Gew.-% zugesetzt. Die Additive werden der Klebemasse bevorzugt in einer Form eingesetzt, bei der die metallionenaktiven (Insbesondere erdalkaliionenaktiven) Zentren in "aktiver" Form vorliegen, das heißt in einer Form, in der sie in der Lage sind, die entsprechenden Ionen zu binden, und nicht in einer bereits durch diese Ionen ganz oder teilweise abgesättigten Form.

Als Klebmassen wurden insbesondere vinylcarbonsäurehaltige, besonders acrylsäurehaltige und/oder methacrylsäurehaltige, (Haft-)Klebmassen eingesetzt (die Vinylcarbonsäuren liegen in der Haftklebmasse insbesondere als einpolymerisierte Comonomere vor; können aber auch - insbesondere als Comonomerreste - in freier Form vorliegen), Der Vinylcarbonsäureanteil (insbesondere Acrylsäureanteil) in der Haftklebemasse kann insbesondere mehr als 20 Ges.-%, sogar mehr als 50 Ges-% betragen Selbst für Klebemassen, deren Vinylcarbonsaureanteil (insbesondere Acrylsäureanteil) bei mehr als 70 und auch 80 Gew.-% lag, hat sich die erfindungsgemäße Additivierung als sehr vorteilhaft herausgestellt.

Die erfindungsgemäß verwendeten Haftklebemassen können als Schichten für Haftklebebänder eingesetzt werden. Solche Klebebänder können sowohl ein- als auch beidseitig klebend ausgestaltet sein.
Bei den Klebebändern handelt es sich insbesondere um solche, welche nach der Meßmethode TAPPI UM 213 (TAPPI Useful Methods 213, TAPPI 1991, ISBN 0898522064) repulpierbar sind.

Gegenstand der Erfindung ist weiterhin die Verwendung der wie vorstehend beschriebenen Klebebänder für die Verklebung von Calcium-(II)-ionenhaltigen Papieren und/oder von Papieren, die die vorgenannten Ionen im Vorstrich (Primer) aufweisen, Haftklebebänder umfassend Schichten der erfindungsgemäß verwendeten Haftklebebemasse können hervorragend in der Papierindustrie im Rahmen des fliegenden Rollenwechsels eingesetzt werden, um ablaufende und neue Papierbannen miteinander zu verbinden, besonders günstig auch in den Fällen, in denen die im Rahmen dieser Schrift dargestellten Probleme mit Erdalkalimetallionen, insbesondere mit Calcium-(II)-Ionen, auftreten.

Überraschender Weise hat sich gezeigt, dass durch die Additivierung die Klebeeigenschaften der Klebmassen, insbesondere der Haftklebmassen, nicht verschlechtert wurde. Der Fachmann hätte hingegen erwartet, dass das Abfangen der aus dem zu verklebenden in die Klebmasse einwandernden Metallionen (beispielsweise der aus einem Papier einwandernden Ca²⁺-Ionen) in der grenzflächenseitigen Schicht der Klebmasse geschehen würde und die Klebmasse durch die sich an der Grenzfläche ansammelnden abgefangenen Ionen, beispielsweise in Form der gebildeten schwerlöslichen Verbindungen, quasi klebtechnisch "deaktiviert" werden würde. Dies konnte wider Erwarten jedoch nicht festgestellt werden, die Klebmasse behielt hingegen ihre vorteilhaften Eigenschaften.

Mit der erfindungsgemäßen Klebmasse ist es gelungen, repulpierbare Klebebänder herzustellen, mit dem sich auch Papiere verkleben lassen, die im Deckstrich als anorganischen Bestandteil Calciumcarbonat enthalten, insbesondere selbst dann, wenn dies der ausschließliche anorganische Bestandteil ist oder im Deckstrich zu sehr hohen Anteilen vorliegt. Die Verklebung eines solchen Papiers bleibt über lange Zeiträume stabil, was mit den Klebmassen nach dem Stand der Technik zuvor nicht gelungen war. Es konnte festgestellt werden, dass die Additivierung der Klebmassen das ursprüngliche Eigenschaftsprofil über einen längeren Anwendungszeitraum hinweg auf hohem Niveau stabilisiert.

### Versuche

In Laborversuchen konnte gezeigt werden, dass die Additivierung von an sich bekannten Haftklebemassen, insbesondere hoch acrylsäurehaltigen Haftklebemassen (das heißt mit einem hohen Anteil an Acrylsäure in der Comonomerzusammensetzung zur Polymerisierung der Klebemasse; hier untersucht an Haftklebemassen mit Acrylsäureanteilen von 50 Gew-% und mehr) in einem Bereich bis zu 10 Gew-% Diammoniumhydrogenphosphat keinen signifikanten Einfluss auf die Klebkräfte hatte, experimentell nachgewiesen durch die Klebkräfte auf Stahl und auf einem Etikettenpapier. Die Anfassklebrigkeit nimmt erst im oberen Additivierungsbereich des oben genannten Mischbereichs zu. Als optimal hat sich eine Additivierung in einer Menge von 2 bis 5 Gew.-% herausgestellt, insbesondere im Bereich von 3 ± 1 Gew.-%. Der elastische Anteil (in %) bei der Messung des Mikroscherweges, welcher ein Maß für die Netzwerkdichte darstellt, blieb auf einem guten Wert. Dieser Test dient der Prüfung der Scherfestigkeit von Klebebändern unter einer Temperaturbelastung von 40°C.

Bei Langzeitmessungen von nicht additivierten und mit einem Gewichtsanteil von 3 % mit Diammoniumhydrogenphosphat abgemischten Klebemassen wurde der Effekt der Alterungsstabilisierung untersucht. Dazu wurden jeweils Proben der genannten Klebemassen auf Papiere aufgetragen, die im Strich Calciumcarbonatanteile von 5, 10, 15, 50 und 100 Gew.-% aufwiesen. Je höher der Anteil an Calciumionen, desto schneller verlief die Alterung der Klebmassen in Hinblick auf deren klebtechnische Eigenschaften (Anfassklebrigkeit, Klebkräfte auf Stahl und Etikettenpapier, Mikroscherwegbestimmung, Scherstandzeiten). Nach der Additivierung mit 3 Gew.-% Diammoniumhydrogenphosphat wurde das Alterungsverhalten bei hoch calciumhaltigen Papieren deutlich verbessert. Bei den Messungen mit Calciumanteilen von 5 und 10 Gew.-% im Papierstrich konnte über eine Messdauer von 40 Tagen sogar festgestellt werden, dass die Klebkräfte sich nicht signifikant verschlechterten.

Durch die Ergebnisse der Langzeitmessungen hat sich somit gezeigt, dass durch die erfindungsgemäße Additivierung eine deutliche Verbesserung der Lagerstabilität der Haftklebemasse in Kontakt mit (erdalkali-)metallionenhaltigen, insbesondere calciumionenhaltigen, Materialien festzustellen ist, wobei die Klebkraft und die Anfassklebrigkeit auch über einen längeren Zeitraum hinweg auf einem guten Niveau verbleibt.

### Beispiele:

### Beispiel 1: Referenzmasse 1

Es wurden 599 g einer 30 %igen Lösung eines radikalisch polymerisierten Gerüstpolymers bestehend aus 47 % Acrylsäure, 48 % Butylacrylat und 5 % Vinylcaprolactam in einem 1:1:1 Gemisch aus Wasser, Isopropanol und Aceton mit 397 g Polyoxyethylen(15)kokosamin (Handelsname Ethomeen C-25, Firma Akzo; CAS-Nr. 61791-14-8) und 0,70 g des Bisglycidylethers von Bisphenol A (Bisphenol-A-Epichlorhydrin Mg < 700; Handelsname Epikote 828 LVEL, Firma Hexion, CAS-Nr. 25068-38-6) abgemischt.
Das Gerüstpolymer ist ferner durch eine massenmittlere Molmasse Mg von 9•10⁵ g/mol und eine Polydispersität von 8 gekennzeichnet.

### Beispiel 2: Referenzmasse 2

### 2.1 Herstellung eines hydrophilen Gerüstpolymers

In eine 2 I fassende vakuumdichte Polymerisations-Stahlapparatur mit Rückflusskühler, Ankerrührer, Heizmantel und Dosiervorrichtungen werden 315 g Acrylsäure, 112,5 g 2-Ethylhexylacrylat, 250 Aceton, 100 g Ethanol und 100 g Wasser eingewogen. Nach Evakuieren, Spülen mit N₂ und Aufheizen auf 62 °C wird unter Rühren eine Lösung von 0,6 g 2,2-Azo-bis-(2-methyl-butyronitril) in 6,4 g Aceton in das bei 600 hPa siedende Reaktionsmedium gegeben. Die Polymerisation setzt unter langsam absinkender Siedetemperatur und Anstieg der Viskosität ein. Nach einer Reaktionszeit von 30 min. werden bei 58 °C erneut 0,5 g 2,2-Azo-bis-(2-methylbutyronitril), gelöst in einem Gemisch von 75 g Aceton, 50 g Ethanol und 50 g Wasser, zugeführt und der Druck auf 700 hPa angehoben. Nach weiteren 60 min. und erneutem Viskositätsanstieg werden bei 60 °C weitere 75 g Aceton, 50 g Ethanol und 50 g Wasser zugegeben und der Druck auf 800 hPa erhöht. Eine erneute Verdünnung wird nach 120 min. bei 63 °C und ca. 1000 hPa (Normaldruck) mit 75 g Aceton, 50 g Ethanol und 50 g Wasser vorgenommen. Die Polymerisation wird bei diesen Bedingungen unter Sieden der Lösung 60 min. fortgesetzt. Danach werden bei 62 °C (Normaldruck) gleichzeitig je eine Lösung von 22,5 g SPA in 127,5 g entsalztem Wasser und eine Lösung von 1,5 g Bis-(4-tert.-butylcyclohexyl)-peroxidicarbonat in 13,5 g Aceton kontinuierlich verteilt über einen Zeitraum von 120 min. in die siedende Polymerlösung eindosiert. Danach wird die Reaktion bei 62 °C Reaktionstemperatur zu Ende geführt und nach einer Gesamtreaktionszeit von 20 h auf RT abgekühlt. Während der gesamten Zeit werden mittels Durchsaugen eines schwachen N₂-Stroms evtl. vorhandene O₂-Mengen aus dem Reaktionsgemisch entfernt. Die erhaltene Polymerlösung ist wasserklar. Der Polymergehalt beträgt 32,42 Gew.-%. Die rel.Visc. gemessen in absol. Methanol bei 25 °C beträgt 3,363.

### 2.2 Herstellung einer repulpierbaren Haftklebemasse.

92,54 g (30 g Polymer) der entsprechend 1.1 hergestellten Polymerlösung werden mit 67,25 g eines ethoxilierten flüssigen primären Kokosfettamins gemischt. Die Wasserstoffatome der Aminogruppe sind bei dieser weichmachenden Verbindung vollständig durch Ethoxiketten substituiert. Die Gesamtzahl der Ethoxieinheiten beträgt pro Aminofunktion durchschnittlich 15 (Handelsname Ethomeen C 25 Firma Akzo). In die Mischung wird unter Rühren 0,05 g des Bisglycidylethers von Bisphenol A (Handelsname Epikote 828 LVEL, Firma Hexion), gelöst in 117 g Aceton, in der Mischung gleichmäßig verteilt und durch Einrühren von 39 g Wasser eine klare streichfähige Haftkleberlösung erhalten.

### Beispiel 3: Referenzmasse 3

### 3.1 Herstellung eines hydrophilen Gerüstpolymers

In eine 2 l fassende, vakuumdichte Polymerisationsapparatur entsprechend Beispiel 1 werden 225 g Acrylsäure, 202,5 g 2-Ethylhexylacrylat, 400 g Aceton und 50 g Ethanol eingewogen. Nach Evakuieren, Spülen mit Stickstoff und Aufheizen auf 62 °C wird unter Rühren eine Lösung von 0,5 g 2,2-Azo-bis-(2-methyl-butyronitril) in 8 g Aceton in das bei 650 hPa siedende Reaktionsmedium gegeben. Die Polymerisation beginnt unter langsam absinkender Siedetemperatur und ansteigender Viskosität des Reaktionsgemisches. Nach einer Reaktionszeit von 50 min. werden bei 58 °C erneut 0,5 g 2,2-Azo-bis-(2-methyl-butyronitril) gelöst in 150,0 g Aceton und 25,0 Ethanol zugegeben. Die Polymerisation wird unter Sieden des Reaktionsgemisches bei 60 °C und 800 hPa fortgesetzt. Nach weiteren 100 min. Reaktionszeit werden 150,0 g Aceton und 25 g Ethanol als Verdünnungsmittel zugegeben und der Druck auf Normaldruck eingestellt. Die Polymerisation wird unter Sieden bei 59 °C - 60 °C weitere 180 min. fortgesetzt. Danach werden bei 60 °C gleichzeitig je eine Lösung von 22,5 g SPA in 127,5 g entsalztem Wasser und eine feinteilige Dispersion von 4 g Bis-(4-tert.-butylcyclohexyl)-peroxidicarbonat in 6 g Wasser in einem Zeitraum von 120 min. in das siedende Reaktionsgemisch dosiert. Die Reaktion wird bei 61 °C mit einer Gesamtreaktionszeit von 20 h zu Ende geführt. Entsprechend Beispiel 1 wird während der Polymerisation für eine inerte Atmosphäre im Reaktionsraum gesorgt. Nach dem Abkühlen wird die Polymerlösung mit 175 g entsalztem Wasser und 50 g Ethanol verdünnt.
Der Polymergehalt beträgt 30,07 Gew.-%, die rel. Visc. gemessen in Methanol/Wasser 4,00 : 1,20 bei 25 °C beträgt 2,500.

### 3.2 Herstellung einer Haftklebemasse

94,8 g (28,5 g Polymer) der entsprechend 3,1 hergestellten Polymerlösung werden mit 60,4 g des im Beispiel 2 unter 1.2 beschriebenen wasserlöslichen Weichmachers gemischt. Hierzu wird eine Lösung von 8,0 g eine Klebharzes (unverestertes Kolophoniumharz mit Säurezahl im Bereich von 170) in 66,7 g Aceton gemischt. Vor dem Ausstreichen wird eine Lösung von 0,094 g des Bisglycidylethers von Bisphenol A (Handelsname Epikote 828 LVEL, Firma Hexion) in 10 g Aceton gleichmäßig in der Mischung verteilt.

### Beispiel 4: erfindunasaemäße Masse 1 (Basispolymer aus Beispiel 1 mit Additiv)

Die in Beispiel 1 beschriebene Masse wird zusätzlich mit 17,3 g Diammoniumhydrogenphosphat abgemischt.

### Beispiel 5: erfindungsgemäße Masse 2 (Basispolymer aus Beispiel 1 mit Additiv)

Die in Beispiel 1 beschriebene Masse wird zusätzlich mit 17,3 g einer kommerziell erhältlichen Zubereitung aus Natriumpolyphosphat und Alkylphosphonat mit hoher Komplexierwirkung (Handelsname Kappafos D11, Hersteller Kapp-Chemie, Calciumbindevermögen von 120 mg CaO/g It. Hersteller) abgemischt.

### Beispiel 6: erfindungsgemäße Masse 3 (Basispolymer aus Beispiel 2 mit Additiv)

Die in Beispiel 2.2 beschriebene Masse wird zusätzlich mit 2,92 g Diammoniumhydrogenphosphat abgemischt.

### Beispiel 7: erfindungsgemäße Masse 4 (Basispolymer aus Beispiel 2 mit Additiv)

Die in Beispiel 2.2 beschriebene Masse wird zusätzlich mit 2,92 g Kappafos D11 abgemischt.

### Beispiel 8: erfindungsgemäße Masse 5 (Basispolymer aus Beispiel 3 mit Additiv)

Die in Beispiel 3.3 beschriebene Masse wird zusätzlich mit 0,855 g Diammoniumhydrogen-phosphat abgemischt.

### Beispiel 9: erfindunasaemäße Masse 6 (Basispolymer aus Beispiel 3 mit Additiv)

Die in Beispiel 3.3 beschriebene Masse wird zusätzlich mit 0,855 g Kappafos D11 abgemischt.

### Messungen

Die in den Beispielen 1-9 hergestellten Haftklebemassen wurden als 30 %ige Lösung in einem 1:1:1 Gemisch aus Wasser, Isopropanol und Aceton auf silikonisiertem Trennpapier beschichtet. Nach 120 minütiger Konditionierung bei Raumtemperatur wurden die Lappenmuster für 20 Minuten bei 100 °C getrocknet. Der Masseauftrag betrug nach der Trocknung 40 g/m². Diese Muster wurden mit Calciumcarbonat enthaltenden Papier kaschiert. Für die Untersuchungen wurde ein Papier der Firma Drewsen SPEZIALPAPIERE GmbH & Co. KG mit dem Handelsnamen "PRODURA Basispapier mit hoher Spaltfestigkeit" verwendet. Die klebtechnische Untersuchung erfolgte jeweils sowohl an frischen Mustern ("Sofort-Messung"), als auch an Mustern die in einem Klimaschrank bei 40 °C und 80 % relativer Luftfeuchtigkeit gelagert wurden (4-Wochen-Messung). Vor den Untersuchungen wurden die Muster jeweils 3 Tage lang bei 23 °C und 50 % relativer Luftfeuchtigkeit konditioniert.

### Klebkraft-Test (Test A)

Die Bestimmung der Klebkraft wurde wie folgt durchgeführt:
Als definierter Haftgrund wurde ein einseitig haftklebrig ausgerüstetes Etikettenpapier mit der haftklebrigen Seite auf eine Stahlplatte montiert. Als zu untersuchende Probe wurde ein 20 mm breiter Streifen der oben beschriebenen Muster unter Belastung (2 kg) auf den Haftgrund aufgedrückt. Unmittelbar im Anschluss daran wurde das Klebeband in einem Winkel von 180 ° vom Haftgrund mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen.

### Mikroscherweg-Test (Test B)

Dieser Test dient der Prüfung der Scherfestigkeit von Klebebändern unter einer Temperaturbelastung von 40 °C.

### Messprobenpräparation:

Als zu untersuchende Probe wurde ein Streifen der oben beschriebenen Muster auf eine polierte, temperierbare, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe betrug Höhe x Breite = 13 mm x 10 mm, die Probe wurde senkrecht aufgehängt, überragte am oberen Rand die Stahl-Prüfplatte um 2 mm und wurde bündig mit einem stabilen Klebestreifen verstärkt, der als Auflage für den Wegmessfühler diente.

### Messung:

Die zu messende Probe wurde am unteren Ende mit einem Gewicht von 100 g belastet. Die Stahl-Prüfplatte mit der verklebten Probe wurde auf 40 °C temperiert. Gemessen wurde die Deformation der Probe mittels Wegmessfühler über einen Zeitraum von 15 Minuten. Die Prüfung erfolgte bei einer Raumtemperatur von 23 ± 3 °C und einer relativen Luftfeuchtigkeit von 50 ± 5 %.

### Ergebnisse

### Repulpierbarkeit

Für alle Beispiele 1 bis 9 konnte mit eigens hierfür wie vorstehend beschrieben hergestellten Mustern festgestellt werden, dass sie nach der Meßmethode TAPPI UM 213 repulpierbar sind.

### Klebkräfte, Scherfestigkeit

In Tabelle 1 sind die klebtechnischen Eigenschaften dargestellt.

**Tabelle 1**

| **Methode** | **KK (tesa Test-A) [N/cm]** | | **Mikroscherweg (Test B) [µm]** | |
|---|---|---|---|---|
| **Lagerung** | **sofort** | **4 Wochen** | **sofort** | **4 Wochen** |
| Bsp. 1 | 3,3 | 0,8 | 91 | 19 |
| Bsp. 2 | 3,1 | 1,5 | 195 | 19 |
| Bsp. 3 | 3,1 | 1,2 | 186 | 27 |
| Bsp. 4 | 3,2 | 3,3 | 95 | 87 |
| Bsp. 5 | 3,2 | 3,1 | 101 | 93 |
| Bsp. 6 | 3,3 | 3,3 | 176 | 158 |
| Bsp. 7 | 3,2 | 3,4 | 181 | 159 |
| Bsp. 8 | 3,4 | 3,3 | 195 | 208 |
| Bsp. 9 | 3,0 | 3,1 | 212 | 178 |

| | | | | |
|---|---|---|---|---|
| KK: Klebkraft | | | | |

An den Beispielen 1-3 lässt sich eine deutlicher Verlust der Klebkraft und eine Reduktion des Scherweges nach einer Lagerung bei 40 °C und 80 % relativer Luftfeuchtigkeit feststellen. Anhand der Beispiele 4-9 wird deutlich, dass sich sowohl die Klebkraft als auch die Scherstrecke beim Mikroscherweg-Test auf einem hohen Niveau stabilisieren lässt, ohne dass sich die Ausgangswerte durch Zugabe der Additive verschlechtern.

## Patentansprüche

1. Verwendung einer Haftklebemasse nach einer an sich bekannten Formulierung, enthaltend Additive, die in der Lage sind, Metallionen im Sinne chemischer Wechselwirkungen, elektrochemischer Wechselwirkungen und/oder physikalischer Wechselwirkungen zu binden, wobei die Additive ausgewählt sind aus der Gruppe umfassend Phosphate, Polyphosphate und Phosphonate,
für die Verklebung auf calcium(II)ionenhaltigen Papier.

2. Verwendung nach Anspruch 1, **dadurch gekennzeichnet, dass**
als Additiv Trinatriumphosphat und/oder Ammoniumphosphat eingesetzt wird.

3. Verwendung nach einem der vorangehenden Ansprüche, **dadurch gekennzeichnet, dass** als Additiv Ammoniumdihydrogenphosphat und/oder Diammoniumhydrogenphosphat eingesetzt wird.

4. Verwendung nach einem der vorangehenden Ansprüche, **dadurch gekennzeichnet, dass** die Klebemasse einen Acrylsäureanteil von mehr als 30 Gew.-% aufweist.

5. Verwendung nach Anspruch 4, **dadurch gekennzeichnet, dass**
die Klebemasse einen Acrylsäureanteil von mehr als 50 Gew.-% aufweist.

## Claims

1. Use of a pressure-sensitive adhesive according to a formulation known per se,
comprising additives capable of binding metal ions in chemical interactions, electrochemical interactions and/or physical interactions, the additives being selected from the group encompassing phosphates, polyphosphates and phosphonates,
for adhesive bonding on paper containing calcium(II) ions.

2. Use according to Claim 1, **characterized in that** trisodium phosphate and/or ammonium phosphate is used as additive.

3. Use according to either of the preceding claims, **characterized in that**
ammonium dihydrogenphosphate and/or diammonium hydrogenphosphate is used as additive.

4. Use according to any of the preceding claims, **characterized in that**
the adhesive has an acrylic acid fraction of more than 30 wt%.

5. Use according to Claim 4, **characterized in that** the adhesive has an acrylic acid fraction of more than 50 wt%.

## Revendications

1. Utilisation d'une masse autoadhésive selon une formulation connue en soi, contenant des additifs qui sont en mesure de lier des ions métalliques dans le sens d'interactions chimiques, d'interactions électrochimiques et/ou d'interactions physiques, les additifs étant choisis dans le groupe comprenant les phosphates, les polyphosphates et les phosphonates, pour le collage sur du papier contenant des ions de calcium (II).

2. Utilisation selon la revendication 1, **caractérisée en ce qu'**on utilise, comme additif, du phosphate trisodique et/ou du phosphate d'ammonium.

3. Utilisation selon l'une quelconque des revendications précédentes, **caractérisée en ce qu'**on utilise, comme additif, du dihydrogénophosphate d'ammonium et/ou de l'hydrogénophosphate de diammonium.

4. Utilisation selon l'une quelconque des revendications précédentes, **caractérisée en ce que** la masse adhésive présente une proportion d'acide acrylique supérieure à 30% en poids.

5. Utilisation selon la revendication 4, **caractérisée en ce que** la masse adhésive présente une proportion d'acide acrylique supérieure à 50% en poids.
